## Europäisches Patentamt

## European Patent Office

## Office européen des brevets

(19)

(11) Veröffentlichungsnummer: **0 212 493**
A1

(12)

# EUROPÄISCHE PATENTANMELDUNG

(21) Anmeldenummer: 86110979.1

(22) Anmeldetag: 08.08.86

(51) Int. Cl.⁴: **B 01 D 53/04**

(30) Priorität: 12.08.85 DE 3528909

(43) Veröffentlichungstag der Anmeldung: 04.03.87
Patentblatt 87/10

(84) Benannte Vertragsstaaten: BE DE FR GB IT NL

(71) Anmelder: **Linde Aktiengesellschaft,
Abraham-Lincoln-Strasse 21, D-6200 Wiesbaden (DE)**

(72) Erfinder: **Leitgeb, Paul, Dr., Wurzelseppstrasse 23,
D-8023 Pullach (DE)**

(74) Vertreter: **Schaefer, Gerhard, Dr., Linde
Aktiengesellschaft Zentrale Patentabteilung,
D-8023 Höllriegelskreuth (DE)**

(54) **Druckwechseladsorptionsverfahren.**

(57)  Vorgeschlagen wird ein Druckwechseladsorptionsverfahren zum Zerlegen eines Gasgemisches mit einer Adsorptionsphase und einer Adsorberregenerierung, die Phasen der Entspannung, der Desorption, die gegebenenfalls unter Verwendung eines Spülgases erfolgt, und des Aufdrückens durchläuft. Dabei wird während mindestens einer Stufe der Entspannung, des Druckaufbaues oder der Spülung ein Entspannungsgas, Druckaufbaugas, Spülgas bzw. mit desorbierten Komponenten beladenes Spülgas aus einem mittleren Bereich des Adsorbers abgezogen bzw. einem mittleren Bereich des Adsorbers aufgegeben.

EP 0 212 493 A1

## Druckwechseladsorptionsverfahren

Die Erfindung betrifft ein Adsorptionsverfahren nach dem Druckwechselprinzip zum Zerlegen eines Gasgemisches, bei dem während einer unter erhöhtem Druck betriebenen Adsorptionsphase adsorbierbare Komponenten selektiv an einem in einem Adsorber enthaltenen Adsorptionsmittel adsorbiert und ein an den adsorbierbaren Komponenten verarmter Gasstrom gewonnen wird und im Anschluß an eine Adsorptionsphase eine mehrstufige Entspannung auf einen niedrigeren Druck sowie eine Desorption zuvor adsorbierter Komponenten, gegebenenfalls unter Verwendung eines Spülgases, stattfindet, wonach der Druck wieder auf den erhöhten Adsorptionsdruck angehoben wird.

Bei der Gaszerlegung durch Druckwechseladsorption wird die druckabhängige Adsorptionskapazität eines Adsorptionsmittels ausgenützt, indem bei einem relativ hohen Druck adsorbierbare Komponenten aus einem einen Adsorber durchströmenden Gasgemisch adsorbiert und während einer späteren Regenerierphase bei verringertem Druck wieder desorbiert werden. Zur Erleichterung bzw. Vervollständigung der Regeneration wird dabei im allge-

0212493

meinen beim niedrigsten Verfahrensdruck ein Spülgas durch den Adsorber geführt, um dadurch desorbierte Anteile aus dem Adsorber auszuspülen und den Partialdruck der zu desorbierenden Komponenten im Adsorber weiter abzusenken. Bei der Durchführung derartiger Verfahren ist es üblich, die Beladung eines Adsorbers zu unterbrechen, bevor die Adsorptionsfront das Austrittsende des Adsorbers erreicht hat. Dies hat den Vorteil, daß die nachfolgende Entspannung des Adsorbers teilweise im Gleichstrom zur Adsorptionsrichtung erfolgen kann, wobei die Adsorptionsfront weiter zum Austrittsende fortschreitet, jedoch noch kein oder nur ein unbedeutender Durchbruch der Adsorptionsfront erfolgt. Bevor wesentliche Mengen an adsorbierbaren Komponenten aus dem Austrittsende des Adsorbers austreten, wird die Entspannung dann üblicherweise im Gegenstrom fortgesetzt. Die während der gegebenenfalls mehrstufig durchgeführten Gleichstromentspannung anfallenden Entspannungsgase werden dabei üblicherweise zum Druckaufbau anderer, zuvor regenerierter Adsorber oder zum Spülen von zu regenerierenden Adsorbern eingesetzt. Ein Verfahren dieser Art ist beispielsweise aus der DE-OS 33 46 032 bekannt.

Diese an sich bewährte und in weitem Umfang in die Praxis eingeführte Verfahrensweise erweist sich jedoch insofern als nicht völlig befriedigend, als das Adsorptionsmittel am Austrittsende eines Adsorbers nicht sehr gut ausgenützt wird, da es lediglich den Durchbruch von adsorbierbaren Komponenten während Gleichstromentspannungsphasen verhindern soll.

Der Erfindung liegt die Aufgabe zugrunde, ein Verfahren der eingangs genannten Art so auszugestalten, daß das Adsorptionsmittel in möglichst effektiver Weise genutzt wird und daß nicht adsorbierbare Komponenten in hoher Produktausbeute und/oder hoher Produktreinheit gewonnen werden können.

-.-

Diese Aufgabe wird dadurch gelöst, daß während mindestens einer Stufe der Entspannung, des Druckaufbaues oder der Spülung ein Entspannungsgas, Druckaufbaugas, Spülgas bzw. mit desorbierten Komponenten beladenes Spülgas aus einem mittleren Bereich des Adsorbers abgezogen bzw. einem mittleren Bereich des Adsorbers aufgegeben wird.

Beim erfindungsgemäßen Verfahren wird während mindestens einer Phase des Schaltzyklus, den jeder Adsorber durchläuft, eine gegenüber üblichen Verfahren abweichende Strömungsführung gewählt, da die beteiligten Gase dann nicht mehr über das Austrittsende oder das Eintrittsende eines Adsorbers, sondern an einer jeweils günstigen Stelle zwischen den Adsorberenden zugeführt bzw. abgezogen werden. Dies führt zu einer Reihe von Verfahrensvorteilen, die je nach Art des Verfahrensschritts, in dem sie angewendet werden, auf unterschiedlichen Wirkungen beruhen.

Wird in einer ersten Ausführungsform des erfindungsgemäßen Verfahrens während einer Gleichstromentspannungsphase Entspannungsgas aus dem mittleren Bereich eines Adsorbers abgezogen, so bedeutet dies für den Teil des Adsorbers, der zwischen der Abzugsstelle für das Entspannungsgas und dem Adsorberaustrittsende liegt, eine Strömungsumkehr gegenüber der üblichen Gleichstromentspannung. Dies hat zur Folge, daß der dem Austrittsende des Adsorbers benachbarte Bereich bereits zu einem früheren Zeitpunkt in Gegenstromrichtung entspannt wird, wodurch die Adsorptionsfront nicht weiter auf das Austrittsende des Adsorbers vorrückt und somit in verringertem Maße mit adsorbierbaren Komponenten beladen wird. Dies hat wiederum günstige Auswirkungen auf die Produktreinheit in einer nachfolgenden Adsorptionsphase bzw. auf den für die vollständige Desorption in diesem Bereich erforderlichen Regenerieraufwand. In dieser ersten Ausführungsform ist es vorteilhaft, das Entspannungsgas an einer Stelle aus dem Adsorber abzuziehen, die etwa zwischen 60 und 90 % der wirksamen Adsorberlänge entspricht.

In weiterer Ausgestaltung dieser Verfahrensweise ist es günstig, bei Verwendung des Gleichstromentspannungsgases zum Druckaufbau eines anderen Adsorbers dieses Gas dem aufzudrückenden Adsorber ebenfalls in einem mittleren Bereich zuzuführen, beispielsweise an einer Stelle, die derjenigen des Abzugs des Entspannungsgases aus dem zu entspannenden Adsorber entspricht.

In einer anderen Ausführungsform der Erfindung wird während einer Gegenstromentspannungsphase aus einem Adsorber abgezogenes Entspannungsgas über einem Mittelabgriff abgeführt. Bei einer üblichen Gegenstromentspannung mit Abzug des Entspannungsgases vom Eintrittsende des Adsorbers werden im Bereich des Adsorbereintritts zuvor bereits desorbierte Komponenten teilweise wieder adsorbiert. Dies trifft insbesondere bei Adsorbern mit unterschiedlichen Adsorptionsmitteln für verschiedene abzutrennende Gaskomponenten zu. Um diese bei der Gegenstromentspannung adsorbierten Komponenten wieder zu verdrängen, ist bei üblicher Verfahrensweise ein erhöhter Spülgasbedarf und/oder ein niedrigerer Regenerierdruck erforderlich, was letztendlich zu einer schlechteren Produktausbeute und/oder einem erhöhten Energiebedarf führt. Wird dagegen erfindungsgemäß während einer Gleichstromentspannungsphase das Entspannungsgas aus einem mittleren Bereich des Adsorbers abgezogen, kann es im Eintrittsende des Adsorbers zu keiner Rückadsorption kommen und die nachfolgende Regenerierung durch Spülung wird erleichtert. In diesem Ausführungsfall der Erfindung ist es zweckmäßig, wenn der Abzug des Gegenstromentspannungsgases an einer Stelle erfolgt, die etwa zwischen 10 und 40 % der Adsorberlänge ausmacht (ab Eintrittsende) oder bei Mehrschichtenadsorbern im Grenzbereich zweier Schichten (O - 30 % der Schichtlänge) erfolgt.

Die Gegenstromentspannung kann bei einer derartigen Ausführungsform der Erfindung gegebenenfalls in zwei Stufen durchgeführt werden, wobei während einer ersten Gegenstromentspannungsphase das Entspannungsgas aus dem mittleren Bereich des Adsorbers abgezogen wird und in einer nachfolgenden zweiten Gegenstromentspannungsphase ein üblicher Abzug über das Adsorbereintrittsende erfolgt. In einer weiteren Ausgestaltung dieser Verfahrensvariante kann der Abzug des Gegenstromentspannungsgases auch gleichzeitig geregelt über über den mittleren Bereich des Adsorbers und über dessen Eintrittsende erfolgen.

Schließlich kann auch die Spülung eines beladenen Adsorbers unter Verwendung eines mittleren Anstichs des Adsorbers für die Zufuhr oder den Abzug von Spülgas erfolgen. Diese Verfahrensweise ist besonders dann günstig, wenn der Adsorber mit verschiedenen Komponenten beladen ist und/oder mindestens zwei Schichten mit unterschiedlichen Adsorptionsmitteln enthält, wobei die unterschiedlichen Komponenten bzw. die beiden Schichten wenigstens teilweise getrennt voneinander gespült werden sollen.

Weitere Einzelheiten der Erfindung werden nachfolgend anhand der in den Figuren schematisch dargestellten Ausführungsbeispiele erläutert.

Es zeigen:

Figur 1 eine erste Ausführungsform der Erfindung, bei der Gleichstromentspannungsgas aus einem mittleren Bereich eines Adsorbers abgezogen wird,

Figur 2   eine zweite Ausführungsform der Erfindung, bei der weiterhin das Gleichstromentspannungsgas in einen mittleren Bereich eines anderen Adsorbers eingeführt wird,

Figur 3   eine weitere Ausführungsform der Erfindung, bei der während der Gegenstromentspannung Entspannungsgas aus einem mittleren Bereich des Adsorbers abgeführt wird,

Figur 4   eine weitere Ausführungsform der Erfindung, bei der ein Spülgas in einen mittleren Bereich des Adsorbers eingeführt wird und

Figur 5   eine weitere Ausführungsform der Erfindung, bei der mit desorbierten Komponenten beladenes Spülgas aus einem mittleren Bereich des Adsorbers abgezogen wird.

Die in den Figuren dargestellten Ausführungsbeispiele sind als Ausschnitte aus einem größeren Adsorptionsverfahren zu verstehen. Es versteht sich, daß die Erfindung bei einer Vielzahl verschiedener Druckwechseladsorptionsverfahren zum Einsatz kommen kann, beispielsweise bei Verfahren mit mindestens zwei Adsorbern bis hin zu einer großen Anzahl an Adsorbern, beispielsweise zwölf oder noch mehr Adsorber, wobei das Verfahren nach einem zunächst beliebigen Taktschema, das auf den jeweiligen Einsatzfall abgestimmt ist, durchgeführt werden kann.

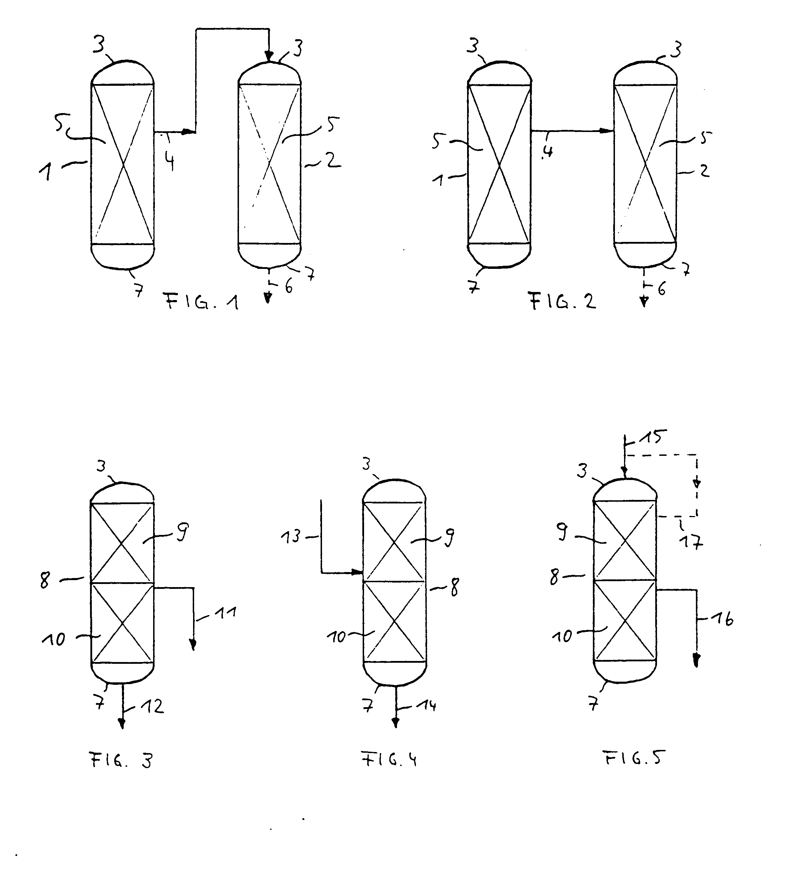

In der Figur 1 sind zwei Adsorber 1 und 2 dargestellt, von denen der Adsorber 1 gerade eine Gleichstromentspannungsphase durchläuft. Die Gleichstromentspannung kann dabei sowohl vom Adsorptionsdruck auf einen Zwischendruck als auch von einem Zwischendruck auf tieferen Druck erfolgen. Gegebenenfalls vorausgegangene Gleichstromentspannungsschritte können unter Umständen auch über das Adsorberaustrittsende 3 geführt worden sein. Während der in der

—.—

Figur 1 dargestellten Gleichstromentspannungsphase wird das Entspannungsgas über einen Mittelanstich 4 des Adsorbers, der in der oberen Hälfte der Adsorptionsmittelschüttung 5 liegt, abgezogen und dem Adsorber 2, der entweder nach erfolgter Regeneration wieder aufgedrückt oder aber gerade gespült wird, von seinem Austrittsende 3 her aufgegeben. Im Falle einer Spülung tritt das mit desorbierten Komponenten beladene Spülgas über Leitung 6 am Eintrittsende 7 des Adsorbers 2 (bezogen auf die Strömungsrichtung während einer Adsorptionsphase) aus.

Bei der in Figur 2 dargestellten Ausführungsform der Erfindung durchläuft der Adsorber 1 den gleichen Verfahrensschritt wie in Figur 1, das über Leitung 4 abgezogene Gleichstromentspannungsgas wird dem Adsorber 2 jedoch ebenfalls in einem mittleren Bereich aufgegeben.

Die Adsorptionsmittelschüttung 5 ist in den Figuren 1 und 2 als eine einheitliche Schüttung dargestellt. Sie kann gegebenenfalls jedoch auch aus mehreren übereinander angeordneten Schichten von unterschiedlichen Adsorptionsmitteln bestehen, wie dies in den Figuren 3 bis 5 dargestellt ist.

In der Figur 3 ist die Gegenstromentspannungsphase eines Adsorbers 8, der Adsorptionsmittelschüttungen 9 und 10 enthält, dargestellt. Dabei wird zunächst Gleichstrom-Entspannungsgas über Leitung 11 aus dem mittleren Bereich des Adsorbers, der etwa in Höhe der Grenzschicht zwischen den beiden Adsorptionsmittelschüttungen 9 und 10 liegt, abgezogen. Nach Erreichen eines Zwischendrucks wird dann weiteres Entspannungsgas über Leitung 12 vom Eintrittsende 7 des Adsorbers abgezogen, bis der niedrigste Verfahrensdruck erreicht ist. Gegebenenfalls können die Gegenstromentspannungsgase auch gleichzeitig oder mindestens teilweise gleichzeitig über die Leitungen 11 und 12 abgezogen werden. Der Abzug mindestens eines Teils des Entspannungsgases über Leitung 11 aus dem mittleren Bereich des Adsorbers 8 hat den in vielen Fällen erwünschten Effekt, daß die aus den Teilbetten 9 bzw. 10 abgezogenen Entspannungsgase, die häufig unterschiedliche Komponenten enthalten, nicht über das jeweils andere Teilbett geführt werden und dort daher auch nicht zu unerwünschten Rückadsorptionen führen können. Wenngleich diese Verfahrensführung in der Figur 3 mit zwei verschiedenen Adsorptionsmittelschüttungen 9 und 10 dargestellt ist, bietet diese Verfahrensführung auch dann Vorteile, wenn es sich um ein einheitliches Adsorptionsbett, wie in den Figuren 1 und 2 dargestellt, handelt, insbesondere wenn in einem solchen Bett unterschiedliche Komponenten adsorbiert werden, also in einer dem Eintrittsende 7 benachbarten Zone eine stärker adsorbierbare Komponente und in einer sich weiter zum Austrittsende 3 des Adsorbers hin erstreckenden Zone eine andere Komponente bevorzugt an das Adsorptionsmittel angelagert wird.

In der Figur 4 ist eine weitere Ausführungsform der Erfindung dargestellt, bei der Spülgas über Leitung 13 in einen mittleren Bereich eines Adsorbers 8 eingeleitet und über eine am Eintrittsende 7 des Adsorbers vorgesehene Leitung 14 abgezogen wird. Diese Führung des Spülgases entspricht im wesentlichen derjenigen des in der Figur 2 dargestellten Adsorbers 2, wobei hier jedoch zwei Adsorptionsmittelschüttungen vorgesehen sind. Ein besonderer Vorteil dieser Spülgasführung ist dann gegeben, wenn insbesondere das Adsorptionsbett 10 von adsorbierten Komponenten befreit werden soll, während das näher zum Austrittsende hin angeordnete Teilbett 9 schon durch die vorausgegangene Entspannung hinreichend regeneriert worden ist, oder wenn für dessen Desorption eine gesonderte

0212493

Spülphase vorgesehen ist, beispielsweise wie in der Figur 5 dargestellt.

Gemäß Figur 5 wird dem Adsorber 8 über das Austrittsende 3 mittels Leitung 15 Spülgas zugeführt, das nach Durchströmen des Teilbettes 9 über Leitung 16 aus einem mittleren Bereich des Adsorbers abgezogen wird. Gegebenenfalls kann das Spülgas auch über die gestrichelt dargestellte Leitung 17 in den oberen Bereich des Teilbettes 9 eingeführt werden.

Patentansprüche

1. Adsorptionsverfahren nach dem Druckwechselprinzip zum Zerlegen eines Gasgemisches, bei dem während einer unter erhöhtem Druck betriebenen Adsorptionsphase adsorbierbare Komponenten selektiv an einem in einem Adsorber enthaltenen Adsorptionsmittel adsorbiert und ein an den adsorbierbaren Komponenten verarmter Gasstrom gewonnen wird, und im Anschluß an eine Adsorptionsphase eine mehrstufige Entspannung auf einen niedrigeren Druck sowie eine Desorption zuvor adsorbierter Komponenten, gegebenenfalls unter Verwendung eines Spülgases, stattfindet, wonach der Druck wieder auf den erhöhten Adsorptionsdruck angehoben wird, dadurch gekennzeichnet, daß während mindestens einer Stufe der Entspannung, des Druckaufbaues oder der Spülung ein Entspannungsgas, Druckaufbaugas, Spülgas bzw. mit desorbierten Komponenten beladenes Spülgas aus einem mittleren Bereich des Adsorbers abgezogen bzw. einem mittleren Bereich des Adsorbers aufgegeben wird.

-.-

0212493

2. Verfahren nach Anspruch 1, dadurch gekennzeichnet, daß während einer Gleichstromentspannungsphase aus einem Adsorber abgezogenes Entspannungsgas aus dem mittleren Bereich des Adsorbers abgezogen wird.

3. Verfahren nach Anspruch 1 oder 2, dadurch gekennzeichnet, daß Entspannungsgas in den mittleren Bereich eines aufzudrückenden Adsorbers eingeleitet wird.

4. Verfahren nach einem der Ansprüche 1 bis 3, dadurch gekennzeichnet, daß während einer Gegenstromentspannungsphase aus einem Adsorber abgezogenes Entspannungsgas aus dem mittleren Bereich des Adsorbers abgezogen wird.

5. Verfahren nach Anspruch 4, dadurch gekennzeichnet, daß während der Gegenstromentspannung Entspannungsgas sowohl vom Eintrittsende als auch aus dem mittleren Bereich des Adsorbers abgezogen wird.

6. Verfahren nach einem der Ansprüche 1 bis 5, dadurch gekennzeichnet, daß während der Spülung eines Adsorbers Spülgas in den mittleren Bereich des Adsorbers eingeleitet und mit Desorbat beladenes Spülgas vom Eintrittsende des Adsorbers abgezogen wird.

7. Verfahren nach einem der Ansprüche 1 bis 6, dadurch gekennzeichnet, daß während der Spülung eines Adsorbers Spülgas über das Austrittsende in den Adsorber eingeleitet und mit Desorbat beladenes Spülgas aus dem mittleren Bereich des Adsorbers abgezogen wird.

8. Verfahren nach einem der Ansprüche 1 bis 7, dadurch gekennzeichnet, daß sich der mittlere Bereich des Adsorbers über dem Bereich von 10 bis 90 % der Adsorberlänge erstreckt.

-.-

0212493

9. Verfahren nach einem der Ansprüche 1 bis 8, dadurch gekennzeichnet, daß der Adsorber mindestens zwei Schichten mit unterschiedlichen Adsorptionsmitteln enthält.

10. Verfahren nach einem der Ansprüche 1 bis 9, dadurch gekennzeichnet, daß der Adsorber nach Beendigung einer Adsorptionsphase mindestens zwei Schichten aufweist, die mit verschiedenen Komponenten beladen sind.

-.-

0212493

FIG. 1

FIG. 2

FIG. 3

FIG. 4

FIG. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-3 338 494 (LINDE AG) <br> * Insgesamt * | 1-5,8 | B 01 D 53/04 |
| X | PATENTS ABSTRACTS OF JAPAN, Band 1, Nr. 106, 19. September 1977, Seite 2359 C 77; & JP-A-52 65 773 (TOYO SODA KOGYO K.K.) 31-05-1977 | 1,6,8 | |
| X | WO-A-8 403 231 (LINDE AG) <br><br> * Seite 12, Zeile 34 - Seite 13, Zeile 16; Seite 17, Zeilen 3-21; Figur 3 * | 1-3,6, 8-10 | |
| X | US-A-4 077 779 (S. SIRCAR et al.) <br> * Spalte 9, Zeilen 56-58; Ansprüche 1,14 * | 1,2,7, 8 | |
| P,X | GB-A-2 163 669 (THE BOC GROUP) <br> * Seite 2, Zeilen 88-122 * | 1-3,8 | |
| P,X | GB-A-2 161 717 (THE BOC GROUP) <br> * Figur 2 * | 1,3,8 | |
| A | DE-B-1 769 135 (MESSER GRIESHEIM) <br> * Spalte 2, Zeilen 16-42 * <br><br> ---     -/- | 1,6-10 | |

**RECHERCHIERTE SACHGEBIETE (Int. Cl.4)**

B 01 D 53/00

Der vorliegende Recherchenbericht wurde für alle Patentansprüche erstellt.

| Recherchenort DEN HAAG | Abschlußdatum der Recherche 29-10-1986 | Prüfer HILD |
|---|---|---|

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82

**0212493**
Nummer der Anmeldung

**EUROPÄISCHER RECHERCHENBERICHT**

Europäisches
Patentamt

EP 86 11 0979

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int Cl.4) |
|---|---|---|---|
| A | EP-A-0 146 082 (LINDE AG) <br> * Ansprüche 1-6; Figuren * | 1,6-10 | |
| | --- | | |
| D,A | EP-A-0 146 124 (LINDE AG) <br> * Ansprüche * | 1,6-10 | |
| | ----- | | |

RECHERCHIERTE
SACHGEBIETE (Int. Cl.4)

Der vorliegende Recherchenbericht wurde für alle Patentansprüche erstellt

| Recherchenort | Abschlußdatum der Recherche | | Prüfer |
|---|---|---|---|
| DEN HAAG | 29-10-1986 | HILD | |